# EUROPEAN PATENT APPLICATION

(11) **EP 4 844 633 A1**
(43) Date of publication of application: **25.11.2026**
(21) Application number: 25305749.1
(22) Date of filing: 23.05.2025
(51) Int. Cl.: G06N 3/045, G06N 3/096, G06V 10/82

(54) **A METHOD OF INFERRING A VISION LANGUAGE MODEL USING AN INCONTEXT LEARNING**

(71) Applicant: TOYOTA JIDOSHA KABUSHIKI KAISHA, Toyota-shi, Aichi-ken 471-8571 (JP); Institut National de Recherche en Informatique et en Automatique, 78153 Le Chesnay Cedex (FR)
(72) Inventor: ALJUNDI, Rahaf, 1140 Brussels (BE); KANG, Zhiqi, 38100 GRENOBLE (FR); ALAHARI, Karteek, 38100 GRENOBLE (FR)
(74) Representative: Cabinet Beau de Loménie

(57) **Abstract**

The disclosure notably relates to computer-implemented method for inferring a VLM using an in-context learning. The method comprises providing a first VLM and a second VLM. The first VLM is pre-trained to perform a first task with respect to at least one first query image. The second VLM is configured to perform at least one second task with respect to at least one second query image. The method further comprises forming a first annotated dataset by performing said at least one second task, using the second VLM, on a plurality of images. The method further comprises providing one or more queries each comprising a query text defining said at least one second task and a query image. The method comprises for each query determining one or more candidate entries from said first annotated dataset, and inferring said first VLM by a first in-context learning with the determined one or more candidate entries as demonstrations for said first in-context learning.

## Description

### TECHNICAL BACKGROUND

### 1. Technical Field

The present disclosure relates to the field of computer programs and systems, more specifically to Vision Language Models (VLMs), and yet more specifically to a method for inferring a VLM using an in-context learning (ICL).

### 2. Description of Related Art

While state-of-the-art vision-language models (VLMs) like in Refs. [1,13, 28] continue to scale in size for improved performance according to scaling laws (see Ref. [11]), small VLMs remain more practical for many real-world applications and many users due to their efficiency in providing a faster response and accessibility to consumer-grade hardware and edge devices. For example, a large VLM with 72B parameters requires enterprise-level hardware, whereas a smaller one with 7B parameters can be deployed on consumer-grade hardware, which is accessible to a wider range of users.

Because a large VLM requires high computational effort and memory footprint, deploying large VLMs on edge devices and mobile applications increases their response latency. Therefore, small vision-language models are the practical solution to be deployed on these devices in terms of the latency. However, having a reduced size compared to a large VLM comes at the expense of a drop in performance for the small VLMs, in particular for unseen tasks during (pre-)training.

As a solution, fine-tuning has been proposed to enhance the performance of a trained VLM for a specific unseen new task, using some raw data of the new task. However, fine-tuning requires data annotation which is expensive. Furthermore, data annotation is time-consuming and cannot be provided for scenarios requiring rapid adaptation and thereby impractical for real-time applications (see Refs. [7, 8]). Fine-tuning also necessitates re-training the VLM totally, which is computationally costly. Fine-tuning also has been shown to be led to a phenomenon called "forgetting" (see Refs. [9, 12]). In other words, fine-tuning a VLM for a new task degrades performance of the original VLM, i.e., before being fine-tuned, on the task the VLM had been originally trained for.

As an alternative solution, in-context learning (ICL) techniques have been developed in the computer vision community in recent years. As is known, ICL techniques exploit demonstrations as context at inference time to guide a model in generating task-specific output without re-training the model. However, such techniques still require annotating the demonstrations, thereby impractical for real-time applications. Furthermore, while ICL has been shown to be effective in large language models (LLMs) as in Refs. [15, 17, 18] and large VLMs as in Refs. [2, 24], its effectiveness remains unclear for small VLMs as discussed in Ref. [35].

As an alternative solution, knowledge distillation techniques allow for transferring the knowledge from a large capable teacher model to a smaller efficient model. Recent works, like Refs. [14] or [34] teach that VLMs models can benefit from the teacher's output, in forms of instructions or chain of thoughts [14]. However, these methods rely on additional training for distillation, which requires additional annotated data. Furthermore, these methods require model training which leads to catastrophic forgetting (as discussed in Ref. [9]).

### SUMMARY

The object of the present disclosure is to at least substantially remedy the above-mentioned drawbacks in deployment of small VLMs for a new task. In particular, there is a need for an improved method of inferring small VLMs using an in-context learning.

Unless otherwise stated, each of the words "example", "embodiment", and "optionally" is used herein to refer to one or more optional features provided in some embodiments and not provided in other embodiments. Any particular embodiment of the invention may include a plurality of such features unless such features conflict. The scope of the present invention is defined by the appended claims. Unless otherwise stated, all aspects, examples, and embodiments described herein are compatible with each other.

In this respect, the present disclosure relates to a computer-implemented method for inferring a VLM using an in-context learning (ICL). The method comprises providing a first VLM. The first VLM is pre-trained to perform a first task with respect to at least one first query image. The method further comprises providing a second VLM. The second VLM is configured to perform at least one second task with respect to at least one second query image. The method further comprises forming a first annotated dataset by performing said at least one second task, using the second VLM, on a plurality of images. Thereby the method obtains an annotation for each image of the plurality of images. The method further comprises providing one or more queries. Each query comprises a query text and a query image. The query text defines said at least one second task. For each query the method further comprises determining one or more candidate entries from said first annotated dataset. For each query, the method further comprises inferring said first VLM by a first ICL with the determined one or more candidate entries as demonstrations for said first ICL.

Hereinafter, the first VLM and the second VLM may be equivalently referred to as student model and teacher model, respectively. As known in the field of artificial intelligence (AI) and machine-learning, a VLM is a multimodal generative AI model that is able to learn from images and text. VLMs are a type of generative models that take image and text inputs, and generate text outputs. A VLM is configured to receive as input at least one query image and at least one query text. The query text may be also referred to as a prompt. A VLM is further configured to output a result of performing a task with respect to said at least one query image. Said task (hence the output) is defined by said at least one input query text.

By "a VLM configured to perform a specific task" it is meant that said VLM has an architecture adapted to said specific task. Such an architecture may, for example, be able to receive an input adapted to said task (for example, an image and/or a text) and produce an output adapted to said task (for example, generating a text or segmenting an image). In other words, by a VLM is configured to perform a specific task it is meant that said VLM is a priori trainable for said specific task. By "a VLM (pre-)trained to perform a specific task" it is meant that said VLM is trained on a dataset of query images in association with a query text defining said specific task. In other words, said dataset (i.e., the training dataset) comprises a plurality of entries where each entry is a query image in association with a query text defining said specific task for which the VLM is to be trained on the training dataset. In some examples, each entry may be further in association with a desired output for said specified task. A VLM (pre-)trained for a specific task is a VLM configured (i.e., trainable) to perform said specific task. By at least one second task it is meant one or more second tasks. Hereinafter, the expression a "second task" may refer to any one of the one or more second tasks.

As explained above, the method further comprises forming a first annotated dataset by performing said at least one second task using the second VLM on (each image of) a plurality of images. Thereby, the method obtains an annotation (i.e., a description or a label) for each image of the plurality of images. In examples, the plurality of images may be unlabeled (or equivalently, unannotated). Alternatively, the plurality of images may be labelled for another task different than said at least one second task. As know *per se,* a dataset is composed of one or more entries. An entry, or equivalently a data entry, is a record stored in a dataset. The first annotated dataset comprises a plurality of entries where each entry comprises an image (of the plurality of images) associated with an output of the second VLM on performing said at least one second task on the image as a respective annotation/description for the image.

As explained above, the method further comprises providing one or more queries. Each query comprises a query text. The query text defines said at least one second task and a query image. The method further comprises, for each query, determining one or more candidate entries from said first annotated dataset. The method then infers, for the query, said first VLM by a first ICL with the determined one or more candidate entries as demonstrations for said first ICL. The determining of one or more candidate entries is determining a sequence of said one or more entries, i.e., according to an order. Therefore, the first ICL exploits the determined one or more candidate entries according to said order. In other words, the first candidate entry of the sequence is used as a first demonstration in the ICL, the second candidate entry of the sequence is used as a second demonstration in the ICL, and so on.

This constitutes an improved solution in inferring a VLM, which is already trained for a first task, in performing a second task. The second task may be a task directed to a particular field (e.g., sport, animals, medicine, etc.) rather than a general task. The second task may be the same as the first task. In such examples the VLM is further improved on the first task using a second VLM as a teacher model without re-training the first VLM. Alternatively, the second task may be different than the first task. In other words, the VLM may be deployed to perform task(s) other than the task it has been originally trained for.

The method achieves such an improved solution using an ICL technique to leverage demonstrations as context to guide the first model in generating outputs for said at least one second task. Such demonstrations are provided at inference time and therefore there is no need to change the parameters of the first model. In this way, the method avoids forgetting happens in the first VLM. In this way, the method also removes the computational burden of such a retraining of the parameters.

Furthermore, the method enables such an improved solution without a need for human data annotation for the demonstrations of the ICL. This is achieved using a second VLM as a teacher model to annotate the data. In other words, the method constitutes an annotation-free and training-free framework to enhance the performance of VLMs. The annotation (and forming the dataset) by the bigger teacher model is realized at an offline stage before the inference time with the first VLM, therefore it does not affect the real-time inference performance.

In this disclosure, by "providing" an element it is meant obtaining or receiving said element by the method. The method may provide said first/second VLM or the plurality of images dataset by accessing local storage (e.g., a hard disk or a RAM) or remote storage (e.g., a cloud service).

In examples, the second VLM may have more parameters than the first VLM. In other words, the first VLM may be a smaller model compared to the second VLM. The second VLM may preferably have more than double the number of parameters of the first VLM. More preferably, the second VLM may have more than five times the number of parameters of the first VLM. Yet more preferably, the second VLM may have more than ten times the number of parameters of the first VLM. In examples, the first VLM may have less than 12 billion parameters, and preferably more than 1 billion parameters, and more preferably more than 4 billion parameters. In examples, the method the second VLM may have more than 12 billion parameters, preferably more than 40 billion parameters.

This constitutes an improved solution as the second VLM is able to be a reliable teacher model for the first VLM by providing reliable annotations as demonstrations for the first ICL. This is particularly interesting for inferring a VLM on edge devices and mobile applications. Indeed, such devices have limited memory and computational power and cannot infer large VLMs with hundreds of billions of parameters. The method provides a solution in which a smaller VLM can exploit a much larger VLM in an ICL framework.

In examples, the first VLM may be a VLM with an accuracy more than a pre-defined threshold on one or more specific tasks. The one or more tasks may be a classification task, a visual question answering (VQA) task, or an operator induction task. Said accuracy of the one or more tasks may be tested on a reference dataset, for example the CUB dataset (as of Ref. [29]) or the VL-ICL benchmark (as of Ref. [35]). Said pre-defined threshold may be a value more than 40%, preferably more than 50%, yet more preferably more than 70%.

By "operator induction task" it is meant to induce from input images and input texts the operator represented by a question mark and respond with the results of the mathematical expression. An operator induction task can be seen as a composition of multiple subtasks. Said subtasks include "text reasoning" i.e., reasoning the operator with purely text input, i.e., when all of the inputs have been converted to text. This subtask is related to the reasoning capability of the LLM in VLMs. Said subtasks further include "image OCR", i.e., to read the expression in the image. This subtask is related to the visual perception ability. Said subtasks further include operator induction without performing the final calculation and "calculate results" which calculates the final results.

Alternatively, or additionally the first VLM, when used in an ICL framework, may have a higher performance upon receiving the first demonstration. In examples, the first VLM may have an accuracy improved by 5%, preferably by 10%, after receiving a first demonstration for performing said at least one second task.

In examples, said at least one second task may be a classification task or a generative task, preferably said at least one second task being one or more of classification, Visual Question Answering (VQA), Optical Character Recognition (OCR), operator induction, text reasoning, and image captioning. Said at least one second task may be a task related to taking action based on the query image received by an apparatus in real-time. For example, the method of the present disclosure may be incorporated into a vehicle controlling unit or a controller of a robot. In such examples, the method may receive the query image from an image sensor of said robot or said vehicle and the at least one second task may be to determine the movements or maneuvers based on the received image as the query.

In examples, the determining of the one or more candidate entries may comprise determining a first subset of entries of the first annotated dataset according to a first similarity measure. The first similarity measure indicates a similarity between the provided query image and a respective annotation of an entry of the first annotated dataset (i.e., an image of the formed dataset). A higher value for the first similarity measure of an image and an annotation means that said image has higher similarity to the annotation. The first subset comprises a first specified number of entries of the first annotated dataset with a highest similarity according to the first similarity measure. In other words, the method may calculate the first similarity measure between the query image and each annotation of the entries in the formed dataset. The method may then order (i.e., rank) the entries according to the first similarity measure. Hence, the method sets the most similar annotation at a first place, the second most similar annotation at a second place, and so on. The method may then select the entries, from the first place up to the first specified number of said order.

By the similarity between the provided query image and said respective annotation it is meant a similarity between an embedding of the query image and the respective annotation. Said embedding may map the query image to a textual space. In examples, said embedding may be an embedding obtained from any multi-modal encoder. In other words, the method may use the encoder to embed the query image into a latent representation. The method may then use said obtained latent representation to measure the similarity between the query image and the respective annotation of an image of the formed dataset. Such examples provide a cross-modal similarity (i.e., a similarity between an image and an annotation). This improves the finding of similar candidate entries when the text defining the at least second task relates to a general question (e.g., "What species is this bird?"). In such cases, a text-to-text similarity between the provided query text and respective annotations of an entry of the formed dataset does not perform well in determining (i.e., filtering) the candidates and thereby adds additional noise in the process.

The multi-modal encoder discussed above may be an external encoder, i.e., an encoder which is not comprised in the first or the second VLM. The method may comprise a step of providing said external encoder. The multi-modal encoder (external or not) may be any encoder that returns latent representation of its input with contrastive properties (i.e., similar images or texts are close to each other, and different images or texts are far from each other).

In examples, the determining of the one or more candidate entries further comprises determining a second subset of entries of the first annotated dataset according to a second similarity measure. The second subset is a subset of the first subset. In other words, the method may first determine the first subset of entries of the first annotated dataset as discussed above and then determine the second subset by selecting a subset out of the first subset. The second similarity measure indicates a similarity between the provided query image and a respective image of an entry from the first subset. A higher value for the second similarity measure of two images means a higher similarity between said two images. By the similarity between the provided query image and said respective image it is meant a similarity between an embedding of the query image and the respective image. Said embedding may be obtained using the multi-modal encoder discussed above. The second subset comprises a second specified number of entries of the first subset with a highest similarity according to the second similarity measure. In other words, the method may calculate the second similarity measure between the query image and each annotation of the entries in the first subset. The method may then order (i.e., rank) the entries according to the second similarity measure. Hence, the method sets the most similar annotation at a first place, the second most similar annotation at a second place, and so on. The method may then select the entries, from the first place up to the second specified number of said order.

In examples, the determining of the one or more candidate entries may further comprise determining a third subset of entries of the first annotated dataset according to a third similarity measure. The third subset is a subset of the second subset. In other words, the method may first determine the first subset of entries of the first annotated dataset, and then the second subset of entries of the first annotated dataset as discussed above and then determine the third subset by selecting a subset out of the second subset. The third similarity measure indicates a similarity between the provided query text and a respective annotation of an entry of the second subset. A higher value for the third similarity measure of two texts (i.e., the query text and the respective annotation) means a higher similarity between said two texts. By the similarity between the provided the provided query text and said respective annotation it is meant a similarity between an embedding of the query text and the respective annotation. Said embedding may be obtained using the multi-modal encoder discussed above. The third subset comprises a third specified number of entries of the second subset with a highest similarity according to the third similarity measure. In other words, the method may calculate the third similarity measure between the query text and each annotation of the entries in the second subset. The method may then order (i.e., rank) the entries according to the third similarity measure. Hence, the method sets the most similar annotation at a first place, the second most similar annotation at a second place, and so on. The method may then select the entries, from the first place up to the third specified number of said order.

The method therefore introduces a similarity-based determining of the one or more candidate entries using the first, the second, and/or the third subset so as to reduce respective noise in the consequence ICL based on the selected entries. The first similarity measure, the second similarity measure, and/or the third similarity measure may comprise a cosine similarity.

In examples, the forming of said first annotated dataset may comprise a test-time scaling (TTS) technique. In other words, a TTS technique known in the field of artificial intelligence (see Refs. [19, 22]), may be used in obtaining said annotation for each image of the plurality of images via performing said at least second task by the second VLM. As known *per se*, TTS uses extra test-time computing to improve performance of a VLM or an LLM but without modifying weights through additional training. Using TTS technique reduces the uncertainty and noise of the model at inference time. This further constitutes an improved method, as the teacher model is still subject to mistakes and using a TTS technique in forming said first annotated dataset helps refining and reducing the noise in the annotations of the teacher model. This noise refinement is beneficial for the student model since these small models are sensitive to the noise in the demonstrations. The method therefore improves the accuracy of the annotation in the first dataset using TTS techniques so as to reduce respective noise in the consequence ICL based on the selected entries.

In examples, the forming of said first annotated dataset may comprise, for each image of the plurality of images one or more iterations. Each iteration comprises performing said at least one second task using the second VLM. Thus, the method obtains a plurality of candidate annotations for the image (i.e., for each image of the plurality of image). The number of iterations may be set at a pre-defined number, for example, 3, 5 or or 10. The method may then determine a candidate annotation with a highest repetition as the annotation of the image. In other words, the method may obtain a plurality of candidate annotations for each image of the plurality of images via multiple applications of the second VLM to each image. The method then chooses the most repeated candidate annotation for each image as the respective annotation. In this way, the method improves the reliability of the annotations in the formed dataset. In examples, the method may further comprise not adding an entry in the first annotated dataset, if the plurality of candidate annotations obtained respective to said image are incoherent. For example, the method may not add an entry in the first annotated dataset if there is no candidate annotation with a repetition larger than a threshold (e.g., 60% or 50% or 40%).

In examples, the forming of the first annotated dataset may further comprise providing a second annotated dataset. Each entry of the second annotated dataset comprises an image associated with an annotation provided by a human. The number of entries in the first dataset may be larger than the second dataset, for example, five times larger, or ten times larger, or hundred times larger. The method may then perform said at least one second task, using the second VLM, on the first dataset using a second ICL. The second ICL uses the second annotated dataset as demonstrations for said second ICL. This provides a few-shot settings in which the method improves the annotation of the first annotated dataset by enhancing the application of the second VLM exploiting a human annotated dataset as demonstrations in an ICL context (hence without further training).

The present disclosure further relates to a computer program comprising instructions for performing the method.

The present disclosure further relates to a computer readable storage medium having recorded thereon the computer program and/or the first and/or the second VLM.

The present disclosure further relates to a system comprising a processor coupled to a memory and preferably a graphical user interface, the memory having recorded thereon the computer program.

### BRIEF DESCRIPTION OF THE DRAWINGS

Features, advantages, and technical and industrial significance of exemplary embodiments of the invention will be described below with reference to the accompanying drawings, in which like signs denote like elements, and wherein:
- FIG. 1 shows a flowchart of an example of the method;
- FIG. 2 shows an inference using an example of the method;
- FIG. 3 shows an example of the system;
- FIG. 4 shows an evaluation of ICL classification tasks, the performance of fine-tuned models and GPT-4o being included as a reference, the best results (excluding oracle) of each model being highlighted in bold;
- FIG. 5 shows an evaluation of ICL generative tasks, the best results (excluding oracle) of each model being highlighted in bold;
- FIG. 6 shows an ablation study based on LLaVA-OneVision for the two techniques in the ICD framework to reduce demonstration noise;
- FIG. 7 shows a comparison of different strategies when three annotations per class are available;
- FIG. 8 shows a comparison between fine-tuning and ICD in a continual learning setting; and
- FIG. 9 shows example practical costs with different annotation strategies.

### DETAILED DESCRIPTION OF EMBODIMENTS

Ways of carrying out the invention are described below in detail, using specific examples and referring to the drawings.

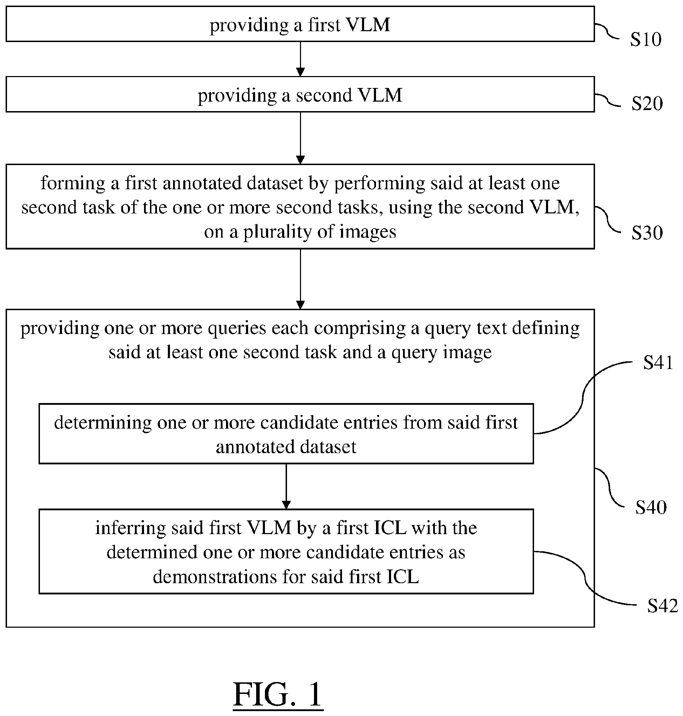

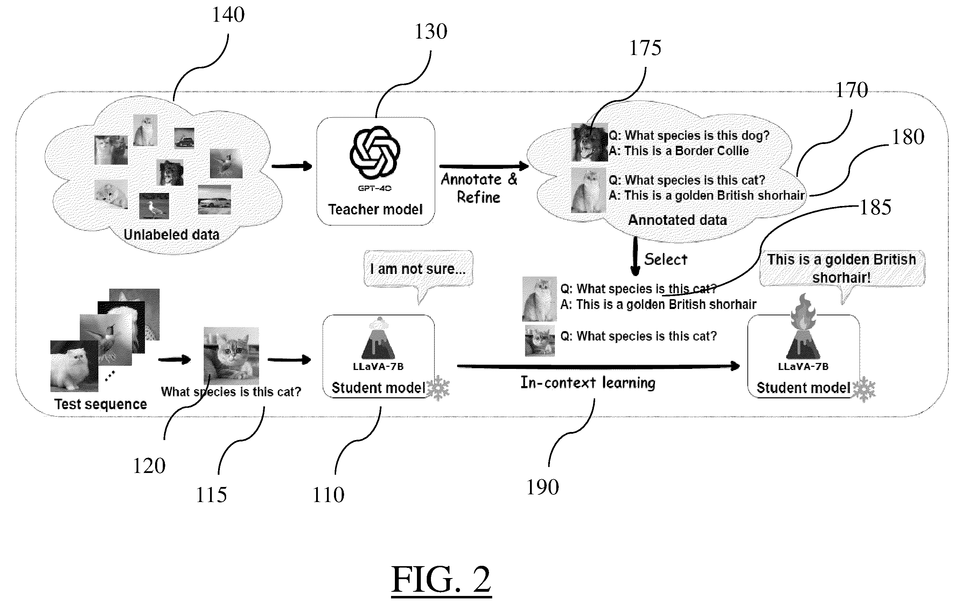

In reference to FIG. 1 and FIG. 2, an example implementation of the method according to present disclosure is discussed. Said implementation forms an in-context distillation (ICD) framework. The implementation at step S10 provides a first VLM 110 which is the student model. The implementation further, at step S20, provides the second VLM 130 which is the teacher model. The teacher model has access to (or is provided with) the plurality of images 140. The at least second task is to obtain the species of an animal (e.g., "What species is this cat?" or "What species is this dog?") as defined by the query text 115.

The implementation forms, at step S30, using the second VLM 130 the first annotated dataset 170. Dataset 170 comprises a plurality of entries. Each entry comprises an image 175 and is associated with the output 180 of performing the at least second task each, i.e., the species proposed by the second VLM (e.g., "This is a Border Collie.", or "This is a British shorthair.")

The implementation, at step S40, is at the online inference stage. The implementation selects one or more candidate entries 185 from said first annotated dataset 170. This selection is based on the similarity between the entries of the first annotated dataset 170 and the query provided to the first VLM. By the query it is meant the combination of query text 115 and query image 120.

The first VLM 110 then uses the selected entries 185 as demonstration of an ICL 190 to perform the at least one second task (which is defined by query text 115) on the query image 120. In mathematical notations, given a general VQA scenario, an ICL can be performed as known in the field of AI using a pretrained VLM (e.g., the first VLM), denoted as *VLM*(*·*)*.*

In more details, given (*I, Q, A*) is a data sample triplet of image, question and answer, respectively, and for a query sample ***X̂*** *=* **(*****Î**,* ***Q̂*)*,*** ICL requires a sequence of demonstrations as $S = \left\{{C}_{1}, {C}_{2},…, {C}_{n}\right\}$ to serve as context at inference time, with C = (***I**,**Q**,**A***)*.*

Let ***Â*** *=* {*â*₁ , *â₂,..., âₜ* } be the generated output sequence of the VLM to answer the query question in an auto-regressive manner. The auto-regressive generation process can be defined as: $VLM \left({\hat{a}}_{t}\left|S, \hat{X}, {\hat{a}}_{1 : t - 1}\right.\right) .$ which indicates that the generation of the token *âₜ* at step *t* is dependent on all previous tokens *â*_{1:*t-*1} generated at steps from 1 to *t -* 1. As shown in the formula above, the generation is also conditional to the context defined by sequence of demonstrations ***S*** and the query sample **X̂.**

In summary, the implementation improves the performance of the first VLM 110 on the at least second task defined by query text 115 using available unlabeled data 150. The method provides annotation to this data to enhance the model's effectiveness at a later deployment phase. The ICD framework comprises two stages: the teacher's annotation stage to transfer knowledge in an offline manner from a large capable teacher model and the student ICL learning stage to effectively acquire knowledge and improve performance at inference time.

The two stages discussed above are now further discussed.

### 1. Teacher annotation and transfer knowledge

Data annotation is an effective way to transfer knowledge. Analogous to teacher and student interactions, annotations in the form of labels, instructions, and rewards provided by humans allow the model to be aligned with the human's knowledge, preferences, or targets during the learning procedure. The implementation feeds unlabeled data to the teacher models and obtains annotations through zero-shot inference. This procedure is automatic, efficient, and offline, i.e., before the deployment of small student models, which does not increase the computation overhead of the student models at inference time.

### 1.1. Improving annotations with test-time scaling

As a teacher model is still subject to mistakes, the implementation leverages test-time scaling (TTS) techniques to further refine and reduce the noise on the teacher annotations. This refinement is beneficial for the student model since they are sensitive to the noise in the demonstrations.

The implementation uses "best-of-N" o strategy (as in Ref. [3]) in which multiple inferences are done, and consistent outputs are selected as the final annotation. This improves the reliability of the annotation.

### 2. Student's ICL for knowledge distillation

The student model leverages the pool of examples annotated by the teacher to enhance its performance in the deployment phase. The implementation transfers teacher knowledge to the student by selecting related samples as demonstrations for ICL.

### 2.1. Demonstration selection for VLMs

For VLMs, demonstration selection generally leverages both vision and language modalities. The implementation employs a cross-modal similarity matching for demonstration selection. The implementation first computes the cosine similarity scores of the query image embedding to the text embeddings of candidate captions/annotations. Then the pool of annotated samples based on these similarity scores ranked for a first filtering step to keep top K candidates. This cross-modal matching is equivalent to image-to-text retrieval and complements text-to-text matching when the query text is too generic.

The implementation then applies the selection mechanism of Ref. [4] (which is incorporated herein by refence) with uni-modal ranking. In other words, for a query sample, a separate ranking is performed on the vision modality, i.e., query image, leading to the filtering of candidates, after which another ranking is performed based on the language modality, i.e., query text, to select the best candidates.

Finally, the implementation performs regular ICL with the student model with the selected demonstration sequence ***S.***

The methods discussed above are computer-implemented. This means that steps (or substantially all the steps) of the methods are executed by at least one computer, or any system alike. Thus, steps of the methods are performed by the computer, possibly fully automatically, or semi-automatically. In examples, the triggering of at least some of the steps of the method may be performed through user-computer interaction. The level of user-computer interaction required may depend on the level of automatism foreseen and put in balance with the need to implement user's wishes. In examples, this level may be user-defined and/or pre-defined.

A typical example of computer-implementation of a method is to perform the method with a system adapted for this purpose. The system may comprise a processor coupled to a memory and a graphical user interface (GUI), the memory having recorded thereon a computer program comprising instructions for performing the method. The memory may also store a database. The memory is any hardware adapted for such storage, possibly comprising several physical distinct parts (e.g., one for the program, and possibly one for the database).

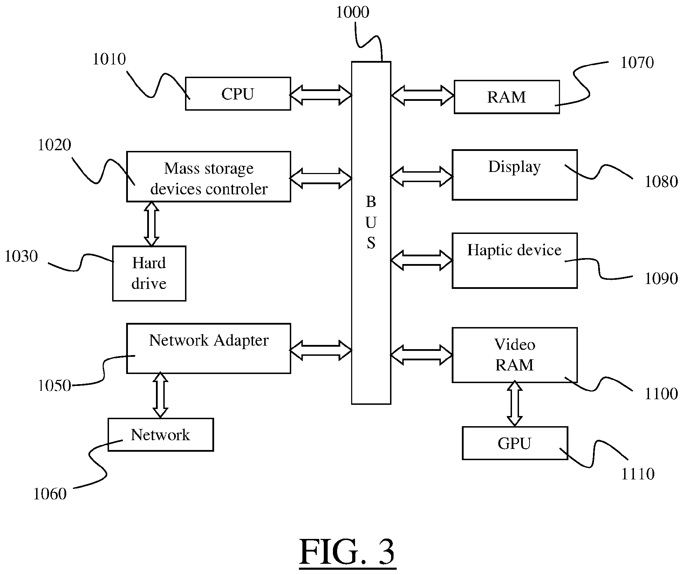

FIG. 3 shows an example of the system, wherein the system is a client computer system, e.g. a workstation of a user.

The client computer of the example comprises a central processing unit (CPU) 1010 connected to an internal communication BUS 1000, a random access memory (RAM) 1070 also connected to the BUS. The client computer is further provided with a graphical processing unit (GPU) 1110 which is associated with a video random access memory 1100 connected to the BUS. Video RAM 1100 is also known in the art as frame buffer. A mass storage device controller 1020 manages accesses to a mass memory device, such as hard drive 1030. Mass memory devices suitable for tangibly embodying computer program instructions and data include all forms of nonvolatile memory, including by way of example semiconductor memory devices, such as EPROM, EEPROM, and flash memory devices; magnetic disks such as internal hard disks and removable disks; magneto-optical disks. Any of the foregoing may be supplemented by, or incorporated in, specially designed ASICs (application-specific integrated circuits). A network adapter 1050 manages accesses to a network 1060. The client computer may also include a haptic device 1090 such as cursor control device, a keyboard or the like. A cursor control device is used in the client computer to permit the user to selectively position a cursor at any desired location on display 1080. In addition, the cursor control device allows the user to select various commands, and input control signals. The cursor control device includes a number of signal generation devices for input control signals to system. Typically, a cursor control device may be a mouse, the button of the mouse being used to generate the signals. Alternatively or additionally, the client computer system may comprise a sensitive pad, and/or a sensitive screen.

The computer program may comprise instructions executable by a computer, the instructions comprising means for causing the above system to perform the method. The program may be recordable on any data storage medium, including the memory of the system. The program may for example be implemented in digital electronic circuitry, or in computer hardware, firmware, software, or in combinations of them. The program may be implemented as an apparatus, for example a product tangibly embodied in a machine-readable storage device for execution by a programmable processor. Method steps may be performed by a programmable processor executing a program of instructions to perform functions of the method by operating on input data and generating output. The processor may thus be programmable and coupled to receive data and instructions from, and to transmit data and instructions to, a data storage system, at least one input device, and at least one output device. The application program may be implemented in a high-level procedural or object-oriented programming language, or in assembly or machine language if desired. In any case, the language may be a compiled or interpreted language. The program may be a full installation program or an update program. Application of the program on the system results in any case in instructions for performing the method. The computer program may alternatively be stored and executed on a server of a cloud computing environment, the server being in communication across a network with one or more clients. In such a case a processing unit executes the instructions comprised by the program, thereby causing the method to be performed on the cloud computing environment.

Although the present disclosure refers to specific exemplary embodiments, modifications may be provided to these examples without departing from the general scope of the invention as defined by the claims. In particular, individual characteristics of the different illustrated/mentioned embodiments may be combined in additional embodiments. Therefore, the description and the drawings should be considered in an illustrative rather than in a restrictive sense.

### Experiments

### Experimental settings

Classification-based tasks were considered to show a good potential of ICL with capabilities of image-text alignments. Some generative tasks, such as VQA and image captioning were also considered under the condition that they designate specific domain knowledge.

For classification tasks, GTSRB (as of Ref. [23]) was used which contains over 50,000 traffic sign images across 43 classes for recognition tasks. Furthermore, WikiArt (as of Ref. [27]) was used which includes paintings from 27 artistic styles with more than 80k images from over 1000 artists. In addition, CUB (as of Ref. [29]) was used comprising 11,788 bird images from 200 species, enabling fine-grained classification. For the experiments, the labels were converted to answer A, in order to form a VQA sample.

For generative tasks, PMC-VQA (as of Ref. [32]) was used which is a biomedical VQA dataset that contains a total of 227k VQA pairs of 149k images that cover various modalities or diseases with domain-specific reasoning. VQA-AD (as of Ref. [3]) was used which focuses on decision-making given synthetic autonomous driving scenes, covering 5 driving actions with 250 frames for training and 100 frames for testing. Furthermore, Flickr30k (as of Ref. [31]) was used which features 31,000 images with human-annotated captions for image-text modeling.

Different types of models were considered in the experiments, including LLaVA-1.5 (as of Ref. [16]) and LLaVA-OneVision (as of Ref. [13]), which are two generations from the same model family, MMICL (as of Ref. [33]) which is an in context tuned VLM, InternVL2.5 (as of Ref. [5]) which is one of the best-performing small VLMs. As for the teacher model, the GPT-4o (as of Ref. [1]) was considered as the teacher model.

The upper bound ICL performance is obtained human annotations referred to as Oracle baseline. ICLs with zero-shot annotations obtained from each student model, denoted as Self-labeling. For the fine-tuning method, the InternVL2.5 was model was used as the baseline. The fine-tuning was performed by LoRA (as of Ref. [10]) on the full oracle data or teacher-labeled data.

The in-context distillation (ICD) framework according to present disclosure contains the teacher's labeling with TTS refinement and student's ICL with cross-modal selection.

The methods were evaluated with zero-shot and up to 5 demonstrations for ICL. Standard evaluation metrics for each dataset were considered. A text-level match was used to measure the accuracy of classification tasks and VQA tasks (PMC-VQA and VQA-AD). For Image captioning tasks, the BLEU-4 scores (as of Ref. [20]) were reported.

For the test-time scaling of the teacher model, the same input was inputted three times to GPT-4o with its default temperature = 1 and only the consistent predictions were kept.

### Results

### Classification-based ICL tasks.

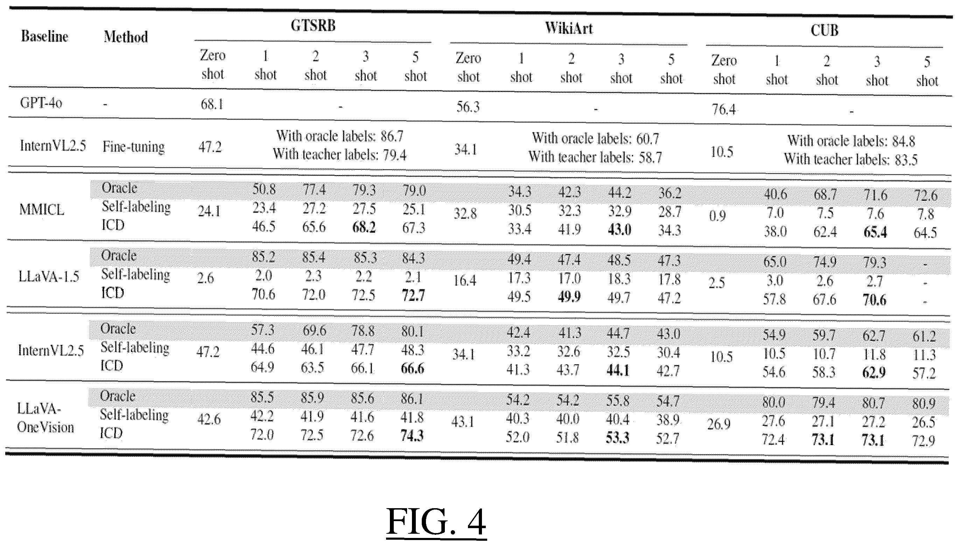

FIG. 4 shows a comparison of the performance of the method of the present disclosure (i.e., ICD) with other baselines in classification tasks. An improved performance with more demonstrations across different models and datasets with oracle labels was observed. This justifies the effectiveness of ICL in these tasks. However, such an upward trend plateaus at three demonstrations and diminishes at five demonstrations. This can be explained by the difficulty of models as context length increases but also the sensitivity to demonstration noise as similarity-based selection prioritizes the most relevant samples first, while later samples tend to introduce more noise.

Comparing the ICD to the model's zero-shot, a consistent boost in performance was observed. This closes the gap between the small VLMs and the powerful teacher. For example, the performance of LLaVA-Onevision was enhanced from 26.9% to 73.1%, which is comparable to GPT-4o's performance of 76.4% on CUB. This performance boost enables the model to be practically beneficial in these tasks with no change in models' parameters. In addition, experiments with teacher's annotations reached comparable performance with human annotations, which confirms that a powerful large model (with adequate post-processing, e.g. TTS) can provide useful supervision at a similar level to human annotations. However, self-labeling failed to provide consistent and informative annotations, thus struggling to improve in a self-distillation manner compared to zero-shot. This comparison justifies the use of a strong teacher for distillation.

Although all baseline models share the same teacher for distillation, they did not converge to the same performance with ICD. For instance, the LLaVA model family tends to perform better in classification tasks than InternVL2.5. This can be explained by different inherent capabilities of the models resulting from their pre-training stage.

### Generative ICL tasks.

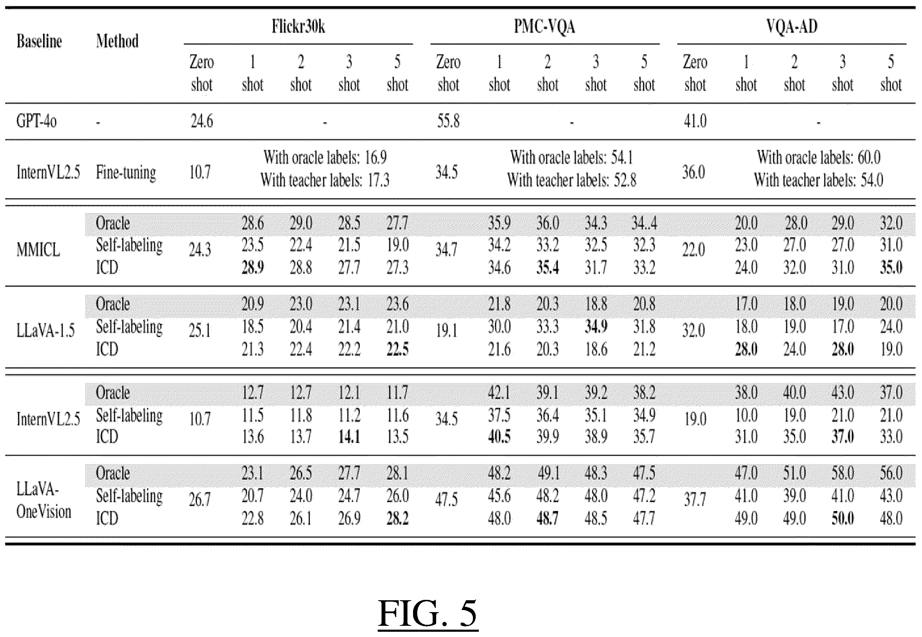

FIG. 5 presents the evaluations on generative tasks, such as image captioning and VQA. The same trend of improved performance with ICL for more recent and powerful models was observed in most cases. However, there is a mixed impact of ICL for weaker VLMs, e.g. LLaVA-1.5 and MMICL, as they struggle to improve over their zero-shot performance with ICL. This confirms that that some small VLMs have limited inherent capabilities to perform complex tasks.

In the PMC-VQA dataset, LLaVA-1.5 seems to have an unexpectedly better ICL performance with self-labeling 487 than with oracle or ICD. However, as observed, the model collapsed at inference by repeating one option most of the time: 89 72.5% of its answers were A among four possible option letters. This highlights another challenge in ICL for small VLMs which is the fact that poor-quality demonstrations can impair the model's reasoning process, leading to shortcuts that favor trivial answers.

Interestingly, while the teacher model (GPT-4o) does not achieve a better BLEU-4 score than the student LLaVA-OneVision in the image captioning task (24.6 vs. 26.7 on Flicker30k), it still helps the model to improve via ICL compared to self-labeling. This can be explained as GPT-4o tends to generate more detailed captions. To validate this, the string length of each model's caption was calculated. While LLaVA-OneVision's average length is 44.2 characters, that of GPT-4o is 62.6, which is 40% longer.

This shows that the teacher with a more consistent labeling strategy, especially with TTS, and more detailed answers or considerations would provide additional information and reduce the uncertainty in annotations provided to the student models.

From the generative task's experiments, it was observed a clear superiority for the recent small VLMs, this is especially clear when comparing LLaVA-1.5 with LLaVA-OneVision. This highlights that the recent advancement of VLMs implicitly improves the ICL capabilities of the models without specific context tuning. On average, the ICD brings 18.2% and 16.9% points of performance gain for InternVL2.5 and LLaVA-OneVision across all tasks considering the best case ICL performance, respectively, and 13.9% and 15.0% considering the worst-case ICL performance.

### Additional analysis

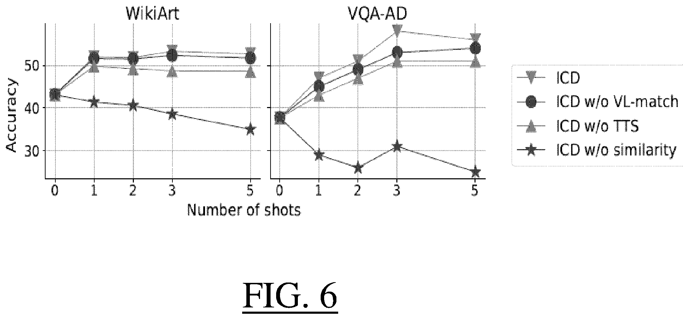

First, in an ablation study, the effectiveness of the two components to reduce demonstration noise was studies. FIG. 6 shows ICD w/o VL-match (i.e., the ICD without the cross-modality measure), ICD w/o TTS (which removed the TTS technique for annotation refinement), as well as VL w/o similarity which uses random selection instead of a similarity measure.

As can be seen, ICD has a better performance compared to ICD w/o VL-match. Specifically, there is a 5.5% (45.3% vs. 50.8%) demonstration accuracy gain (i.e., a gain due to better selection of demonstrations) on average with VL-match in ICD. ICD w/o similarity leads to a significant performance drop, highlighting the necessity of the selection mechanism.

The performance drop in ICL w/o TTS also confirms the essential role of TTS. If the oracle labels are used to evaluate the annotation accuracy, a 9.7% annotation accuracy gain (i.e., a gain due to better annotation in the formed dataset) is observed with TTS (57.6% vs. 67.3%) on WikiArt.

These results confirm the effectiveness of the design choices to reduce the noise in the demonstration selection.

### Few-shot setting

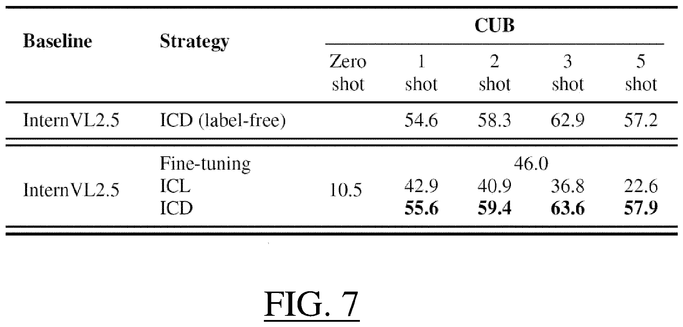

While the proposed ICD framework can work in an annotation-free manner, an investigation was made into the case when a few human annotations are available. A few-shot scenario is used with three samples per class/category. The results for different strategies are shown in FIG. 7.

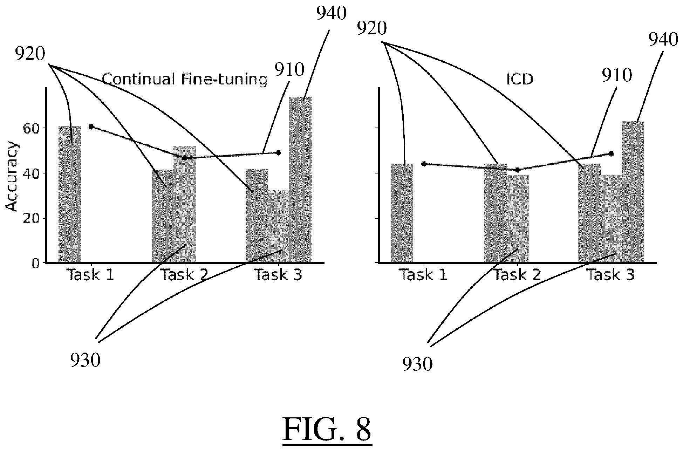

Fine-tuning led to better gains compared to ICL using the few-shot labels, and the ICL deteriorates as more shots are provided in demonstrations. However, fine-tuning creates a model specialized in this task and risks loss of initial knowledge, as it is discussed below in reference to FIG. 8. The ICD with zero human annotation can achieve strong performance gains over few-shot fine-tuning.

As an alternative, instead of providing the student directly with such annotations, these human annotations were provided in context to the teacher model. This leads to a dual in-context learning pipeline, which brings a further boost in performance compared to all other baselines.

These results highlight that the proposed ICD stands as a strong alternative to few-shot fine-tuning and showcases its potential in improving small models' performance with zero parameter change.

### Continual learning setting

The potential of the proposed ICD approach has been also studied in various scenarios, considering a continual learning (CL) setting as of Ref. [6, 30]. CL requires a model to learn sequential tasks while preserving previously acquired knowledge. Therefore, a 3-task setting was designed with one dataset per task (WikiArt 920, VQA-AD 930, CUB 940), as shown in FIG. 8. In FIG. 8, average accuracy is shown by 910, while 920, 930, and 940 refer to WikiArt, VQA-AD, and CUB, respectively.

All datasets seen after each task were evaluated and accuracy per dataset and average accuracy were reported. As can be seen in FIG. 8, while fine-tuning (FIG. 8, left) better specializes in the model for a new task, this knowledge is gradually forgotten when the model learns new tasks, a phenomenon known as catastrophic forgetting.

In contrast, ICD (FIG. 8, right) has almost zero loss of knowledge after learning a new task. This shows an interesting property of ICD for continual adaptation to various tasks and scenarios.

### Teacher models.

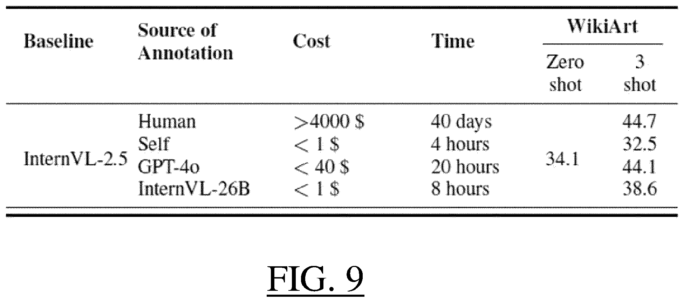

In the experiments discussed above, GPT-4o was used by default as the teacher model. It can be seen from the results presented in FIG. 9 that a medium-size model like InternVL2.5-26B can still serve as the teacher model. These open-source models can be deployed locally and further reduce the cost of annotation.

### Practical costs

A rough estimation of cost for a WikiArt-scale dataset of 80k images is included in the results presented in FIG. 9. While human annotation is thorough and invaluable, it can be time-consuming, taking days or even months. In contrast, automatic annotation, although potentially noisy, can generally be completed within one day. The cost of using proprietary models is relatively low, and with locally deployed models, the cost can be further reduced to power consumption. As a reference, annotating an artistic style dataset of Ref. [21] of 135k images costs a total of 160k$. Overall, the ICD framework strikes a good balance between performance and practical costs.

### References

[1] Josh Achiam, Steven Adler, Sandhini Agarwal, Lama Ahmad, Ilge Akkaya, Florencia Leoni Aleman, Diogo Almeida, Janko Altenschmidt, Sam Altman, Shyamal Anadkat, et al. Gpt-4 technical report. arXiv preprint arXiv:2303.08774, 2023.
[2] Anas Awadalla, Irena Gao, Josh Gardner, Jack Hessel, Yusuf Hanafy, Wanrong Zhu, Kalyani Marathe, Yonatan Bitton, Samir Gadre, Shiori Sagawa, et al. Openflamingo: An open-source framework for training large autoregressive vision language models. arXiv preprint arXiv:2308.01390, 2023.
[3] Bradley Brown, Jordan Juravsky, Ryan Ehrlich, Ronald Clark, Quoc V Le, Christopher Ré, and Azalia Mirhoseini. Large language monkeys: Scaling inference compute with repeated sampling. arXiv preprint arXiv:2407.21787, 2024.
[4] Shuo Chen, Zhen Han, Bailan He, Jianzhe Liu, Mark Buckley, Yao Qin, Philip Torr, Volker Tresp, and Jindong Gu. Can multimodal large language models truly perform multimodal in-context learning?, 2024.
[5] Zhe Chen, JiannanWu, WenhaiWang, Weijie Su, Guo Chen, Sen Xing, Muyan Zhong, Qinglong Zhang, Xizhou Zhu, Lewei Lu, et al. Internvl: Scaling up vision foundation models and aligning for generic visual-linguistic tasks. In Proceedings of the IEEE/CVF Conference on Computer Vision and Pattern Recognition, pages 24185-24198, 2024.
[6] Matthias De Lange, Rahaf Aljundi, Marc Masana, Sarah Parisot, Xu Jia, Ales Leonardis, Gregory Slabaugh, and Tinne Tuytelaars. A continual learning survey: Defying forgetting in classification tasks. IEEE transactions on pattern analysis and machine intelligence, 44(7):3366-3385, 2021.
[7] Bosheng Ding, Chengwei Qin, Linlin Liu, Yew Ken Chia, Shafiq Joty, Boyang Li, and Lidong Bing. Is gpt-3 a good data annotator? arXiv preprint arXiv:2212.10450, 2022.
[8] Benjamin D Douglas, Patrick J Ewell, and Markus Brauer. Data quality in online human-subjects research: Comparisons between mturk, prolific, cloudresearch, qualtrics, and sona. Plos one, 18(3):e0279720, 2023.
[9] Robert M French. Catastrophic forgetting in connectionist networks. Trends in cognitive sciences, 3(4):128-135, 1999.
[10] Edward J Hu, Yelong Shen, Phillip Wallis, Zeyuan Allen-Zhu, Yuanzhi Li, SheanWang, LuWang,Weizhu Chen, et al. Lora: Low-rank adaptation of large language models. ICLR, 1(2):3, 2022.
[11] Jared Kaplan, Sam McCandlish, Tom Henighan, Tom B Brown, Benjamin Chess, Rewon Child, Scott Gray, Alec Radford, Jeffrey Wu, and Dario Amodei. Scaling laws for neural language models. arXiv preprint arXiv:2001.08361, 2020.
[12] Ananya Kumar, Aditi Raghunathan, Robbie Jones, Tengyu Ma, and Percy Liang. Fine-tuning can distort pretrained features and underperform out-of-distribution. arXiv preprint arXiv:2202.10054, 2022.
[13] Bo Li, Yuanhan Zhang, Dong Guo, Renrui Zhang, Feng Li, Hao Zhang, Kaichen Zhang, Peiyuan Zhang, Yanwei Li, Ziwei Liu, et al. Llava-onevision: Easy visual task transfer. arXiv preprint arXiv:2408.03326, 2024.
[14] Liunian Harold Li, Jack Hessel, Youngjae Yu, Xiang Ren, Kai-Wei Chang, and Yejin Choi. Symbolic chain-of-thought distillation: Small models can also "think" step-by-step. In Proceedings of the 61st Annual Meeting of the Association for Computational Linguistics (Volume 1: Long Papers), Toronto, Canada, 2023. Association for Computational Linguistics.
[15] Tianle Li, Ge Zhang, Quy Duc Do, Xiang Yue, and Wenhu Chen. Long-context llms struggle with long in-context learning. arXiv preprint arXiv:2404.02060, 2024.
[16] Haotian Liu, Chunyuan Li, QingyangWu, and Yong Jae Lee. Visual instruction tuning, 2023.
[17] Jiachang Liu, Dinghan Shen, Yizhe Zhang, Bill Dolan, Lawrence Carin, and Weizhu Chen. What makes good in-context examples for gpt-3? arXiv preprint arXiv:2101.06804, 2021.
[18] Yao Lu, Max Bartolo, Alastair Moore, Sebastian Riedel, and Pontus Stenetorp. Fantastically ordered prompts and where to find them: Overcoming few-shot prompt order sensitivity. arXiv preprint arXiv:2104.08786, 2021.
[19] NiklasMuennighoff, Zitong Yang,Weijia Shi, Xiang Lisa Li, Li Fei-Fei, Hannaneh Hajishirzi, Luke Zettlemoyer, Percy Liang, Emmanuel Cande's, and Tatsunori Hashimoto. s1: Simple test-time scaling. arXiv preprint arXiv:2501.19393, 2025.
[20] Kishore Papineni, Salim Roukos, Todd Ward, and Wei-Jing Zhu. Bleu: a method for automatic evaluation of machine translation. In Proceedings of the 40th annual meeting of the Association for Computational Linguistics, pages 311-318, 2002.
[21] Dan Ruta, Andrew Gilbert, Pranav Aggarwal, Naveen Marri, Ajinkya Kale, Jo Briggs, Chris Speed, Hailin Jin, Baldo Faieta, Alex Filipkowski, et al. Stylebabel: Artistic style tagging and captioning. In European Conference on Computer Vision, pages 219-236. Springer, 2022.
[22] Charlie Snell, Jaehoon Lee, Kelvin Xu, and Aviral Kumar. Scaling llm test-time compute optimally can be more effective than scaling model parameters. arXiv preprint arXiv:2408.03314, 2024.
[23] J. Stallkamp, M. Schlipsing, J. Salmen, and C. Igel. Man vs. computer: Benchmarking machine learning algorithms for traffic sign recognition. Neural Networks, pages -, 2012.
[24] Quan Sun, Yufeng Cui, Xiaosong Zhang, Fan Zhang, Qiying Yu, Yueze Wang, Yongming Rao, Jingjing Liu, Tiejun Huang, and Xinlong Wang. Generative multimodal models are in-context learners. In Proceedings of the IEEE/CVF Conference on Computer Vision and Pattern Recognition, pages 14398-14409, 2024.
[27] Wei Ren Tan, Chee Seng Chan, Hernan Aguirre, and Kiyoshi Tanaka. Improved artgan for conditional synthesis of natural image and artwork. IEEE Transactions on Image Processing, 28(1):394-409, 2019.
[28] Gemini Team, Rohan Anil, Sebastian Borgeaud, Jean-Baptiste Alayrac, Jiahui Yu, Radu Soricut, Johan Schalkwyk, Andrew M Dai, Anja Hauth, Katie Millican, et al. Gemini: a family of highly capable multimodal models. arXiv preprint arXiv:2312.11805, 2023.
[29] Catherine Wah, Steve Branson, Peter Welinder, Pietro Perona, and Serge Belongie. The Caltech-UCSD birds-2002011 dataset. Technical Report CNS-TR-2011-001, California Institute of Technology, 2011.
[30] Liyuan Wang, Xingxing Zhang, Hang Su, and Jun Zhu. A comprehensive survey of continual learning: Theory, method and application. IEEE Transactions on Pattern Analysis and Machine Intelligence, 2024.
[31] Peter Young, Alice Lai, Micah Hodosh, and Julia Hockenmaier. From image descriptions to visual denotations: New similarity metrics for semantic inference over event descriptions. Transactions of the association for computational linguistics, 2:67-78, 2014.
[32] Xiaoman Zhang, Chaoyi Wu, Ziheng Zhao, Weixiong Lin, Ya Zhang, Yanfeng Wang, and Weidi Xie. Pmc-vqa: Visual instruction tuning for medical visual question answering. arXiv preprint arXiv:2305.10415, 2023.
[33] Haozhe Zhao, Zefan Cai, Shuzheng Si, Xiaojian Ma, Kaikai An, Liang Chen, Zixuan Liu, Sheng Wang, Wenjuan Han, and Baobao Chang. Mmicl: Empowering vision-language model with multi-modal in-context learning. arXiv preprint arXiv:2309.07915, 2023.
[34] Baichuan Zhou, Ying Hu, Xi Weng, Junlong Jia, Jie Luo, Xien Liu, Ji Wu, and Lei Huang. Tinyllava: A framework of small-scale large multimodal models, 2024.
[35] Yongshuo Zong, Ondrej Bohdal, and Timothy Hospedales. Vl-icl bench: The devil in the details of multimodal in-context learning. arXiv preprint arXiv:2403.13164, 2024.

## Claims

1. A computer-implemented method for inferring a Vision Language Model (VLM) using an in-context learning (ICL), the method comprising:
- providing (S10) a first VLM, the first VLM being pre-trained to perform a first task with respect to at least one first query image;
- providing (S20) a second VLM, the second VLM being configured to perform at least one second task with respect to at least one second query image;
- forming (S30) a first annotated dataset by performing said at least one second task, using the second VLM, on a plurality of images, thereby obtaining an annotation for each image of the plurality of images;
- providing (S40) one or more queries each comprising a query text defining said at least one second task and a query image, wherein for each query the method further comprises:
▪ determining (S41) one or more candidate entries from said first annotated dataset; and
▪ inferring (S42) said first VLM by a first ICL with the determined one or more candidate entries as demonstrations for said first ICL.

2. The method of claim 1, wherein the second VLM has more parameters than the first VLM, preferably more than double the number of parameters of the first VLM, more preferably more than five times the number of parameters of the first VLM, and yet more preferably more than ten times the number of parameters of the first VLM.

3. The method of any preceding claim, wherein the first VLM has less than 12 billion parameters, and preferably more than 1 billion parameters, and more preferably more than 4 billion parameters.

4. The method of any preceding claim, wherein the second VLM has more than 12 billion parameters, preferably more than 40 billion parameters.

5. The method of any preceding claim, wherein said at least one second task is a classification task or a generative task, preferably said at least one second task being one or more of classification, Visual Question Answering (VQA), Optical Character Recognition (OCR), operator induction, text reasoning, and image captioning.

6. The method of any preceding claim, wherein the determining of the one or more candidate entries comprises determining a first subset of entries of the first annotated dataset according to a first similarity measure, the first similarity measure indicating a similarity between the provided query image and a respective annotation of an entry of the first annotated dataset; the first subset comprising a first specified number of entries of the first annotated dataset with a highest similarity according to the first similarity measure.

7. The method of claim 6, wherein the determining of the one or more candidate entries further comprises determining a second subset of entries of the first annotated dataset according to a second similarity measure, the second subset being a subset of the first subset, the second similarity measure indicates a similarity between the provided query image and a respective image of an entry from the first subset, the second subset comprising a second specified number of entries of the first subset with a highest similarity according to the second similarity measure..

8. The method of claim 7, wherein the determining of the one or more candidate entries further comprises determining a third subset of entries of the first annotated dataset according to a third similarity measure, the third subset being a subset of the second subset, the third similarity measure indicates a similarity between the provided query text and a respective annotation of an entry of the second subset, the third subset comprising a third specified number of entries of the second subset with a highest similarity according to the third similarity measure.

9. The method of any of claims 6 to 8, wherein the first similarity measure, the second similarity measure, and/or the third similarity measure comprises a cosine similarity.

10. The method of any preceding claim, wherein the forming of said annotated dataset comprises a test-time scaling (TTS) technique.

11. The method according to claim 10, wherein the forming of said annotated dataset comprises, for each image of the plurality of images:
- iterations of, using the second VLM, performing said at least one second task, thereby obtaining a plurality of candidate annotations for the image; and
- determining a candidate annotation with a highest repetition as the annotation of the image.

12. The method of any preceding claim, wherein the forming of the first annotated dataset further comprises providing a second annotated dataset, each entry of the second annotated dataset comprising an image associated with an annotation provided by a human; and
wherein the performing said at least one second task, using the second VLM, on the first dataset comprises using a second ICL with the second annotated dataset as demonstrations for said second ICL.

13. A computer program comprising instructions for performing the method of any of claims 1-12.

14. A computer-readable medium memory having recorded thereon the computer program of claim 13.

15. A system comprising a processor coupled to a memory, the memory having recorded thereon the computer program of claim 13.
